# EUROPEAN PATENT APPLICATION

(11) **EP 1 923 275 A2**
(43) Date of publication of application: **21.05.2008**
(21) Application number: 07380313.2
(22) Date of filing: 12.11.2007
(51) Int. Cl.: B60R 21/215

(54) **Airbag module for automotive vehicle steering wheels**

(30) Priority: 16.11.2006 ES 200602479 U
(71) Applicant: Seat, S.A., 08760 Martorell - Barcelona (ES)
(72) Inventor: Sanchez Anton, José Maria c/o Seat, S.A., 08760 Martorell Barcelona (ES); Margalef I Fabro, Rafael c/o Seat, S.A., 08760 Martorell Barcelona (ES)
(74) Representative: Carvajal y Urquijo, Isabel

(57) **Abstract**

The invention relates to an airbag module for automotive vehicle steering wheels, comprising a gas generator (13), a flexible walled cushion or bag (14) connected to the gas generator for the inflation thereof in the event of generator activation, and a cover enclosing the generator (13) and the folded cushion (14), assembled in the steering wheel. The cover is formed by a cylindrical wall (3) surrounding the generator and cushion and by an independent lid (2) that can be fitted and fixed in the open outer base of the cylindrical wall (3) for the closure thereof. The lid (2) forms the visible central area of the steering wheel (1) and has an extension after the edge by way of a flexible strap or tongue (9) axially abutting against and fixed on the cylindrical wall (3). The cylindrical wall (3) has, after the edge in which the lid is fitted, weakening lines (7) that can be broken by the inflation of the bag or cushion (14).

## Description

### Field of the Invention

The present invention relates to an airbag module for automotive vehicle steering wheels comprising a gas generator, a flexible walled cushion or bag that is connected to the gas generator so that it can be inflated in the event of activation of said generator, and a protective cover assembled in the central area of the steering wheel and enclosing the generator and cushion in the folded state.

### Background of the Invention

In traditional airbag modules, the cover enclosing the generator and cushion is made of a single part. This cover encloses the generator and cushion both on the sides and in the front and forms part of the visible surface of the steering wheel.

When the mentioned cover is formed from a single part, the appearance of the entire central area of the steering wheel occupied by said cover will be uniform, with unique texture and coloring corresponding to those of said cover, without allowing its color or finish to be modified.

In addition, the activation of the airbag causes the cover to break, portions being able to be released that can be projected against the driver.

Since the entire cover is made of a single part, it requires a greater surface made of a special material, therefore it is more expensive to manufacture.

### Description of the Invention

The object of the present invention is to eliminate the problems set forth by means of a module that allows different colors and finishes to be used in the visible surface thereof and thereby modifying the color and finish of the steering wheel.

Another object of the invention is to eliminate risk that portions of the cover may be released when the airbag is activated, thus eliminating the risk of driver injuries.

According to the invention, the airbag cover is formed by 2 independent parts, body and lid, which can be fitted and fixed together and which allows the color and finish of the steering wheel frame to be modified.

The body forming part of the airbag cover consists of an approximately cylindrical wall surrounding the generator and airbag cushion. This cylindrical wall is closed by means of an independent lid that can be fitted and fixed in the open outer base of the cylindrical wall. The lid will form the visible central area of the steering wheel and has an extension after the edge by way of a flexible strap or tongue axially abutting against and fixed on the cylindrical wall.

The cylindrical wall or body of the cover has, after the edge in which the lid is fitted, weakening lines that can be broken by the inflation of the bag or cushion.

These weakening lines allow a clean and fast break of the cover upon receiving an impact from the inner part of the body caused by the sudden inflation of the airbag cushion in the event of the activation thereof.

The cylindrical wall is finished at the outer edge with an inner ring-shaped flange forming a continuous inner step on which a complementary step that the lid has along its edge in turn rests and fits. With this set-up, the lid can only be coupled to the cylindrical wall before assembly the airbag assembly on the center of the steering wheel. The opening or removal of the lid by the vehicle occupants is thus prevented.

The extension in the form of a strap or flange of the lid has, close to its start, a transverse weakening area providing flexibility for said strap or flange. This strap or flange furthermore has, in the end area limited by the transverse weakening area, a series of openings for the passage of elements for fastening or anchoring it to the cylindrical wall.

With the discussed set-up and due to the transverse weakening area of the strap or tongue, when the airbag is activated the lid will open, describing a semicircular movement, from the closure position, remaining fastened to the cylindrical wall without any part being released when the airbag explodes, thereby complying with the safety standards in force.

As indicated, the gas generator is located inside the cover, enclosed by the airbag cushion. In the event of an accident of the automobile, the generator quickly releases the gas, taking just a few milliseconds to inflate the airbag cushion. Upon inflation, the cushion exerts pressure on the inner part of the airbag module and causes the body to break along the tear marks the cylindrical wall has after the upper edge. At this time the lid is free, which separates describing the previously mentioned semicircular movement due to the thrust that the cushion exerts thereon upon inflation.

The advantage derived from the discussed set-up is the participation in two parts of the cover of the airbag module. This system reduces the surface used in the frame of the steering wheel and allows the airbag module to be customized, thus updating the design over time. It further creates a new product range focusing on the colors and finishes of the steering wheel coating. A technological vision is also provided in the automobile which will have a new and modern appearance.

### Brief Description of the Drawings

The set-up and features of the airbag module will be better understood with the following description made in reference to the attached drawings which show a nonlimiting embodiment.

In the drawings:
Figure 1 shows a front elevational view of the steering wheel of an automobile in which the airbag module of the invention has been installed.
Figure 2 shows a diametrical sectional view of the airbag of the invention, taken according to section line II-II of Figure 1.
Figure 3 shows a cross-sectional view of the cover of the airbag module of the invention without the gas generator and flexible cushion, taken according to section line III-III of Figure 2.
Figure 4 shows a plan view of the lid of the airbag module body module.
Figure 5 shows a view similar to the view of Figure 4, showing an implementation variant.
Figure 6 shows a partial sectional view of the tongue or strap of the lid of the airbag, taken along section line VI-VI of Figure 5.

### Detailed Description of an Embodiment

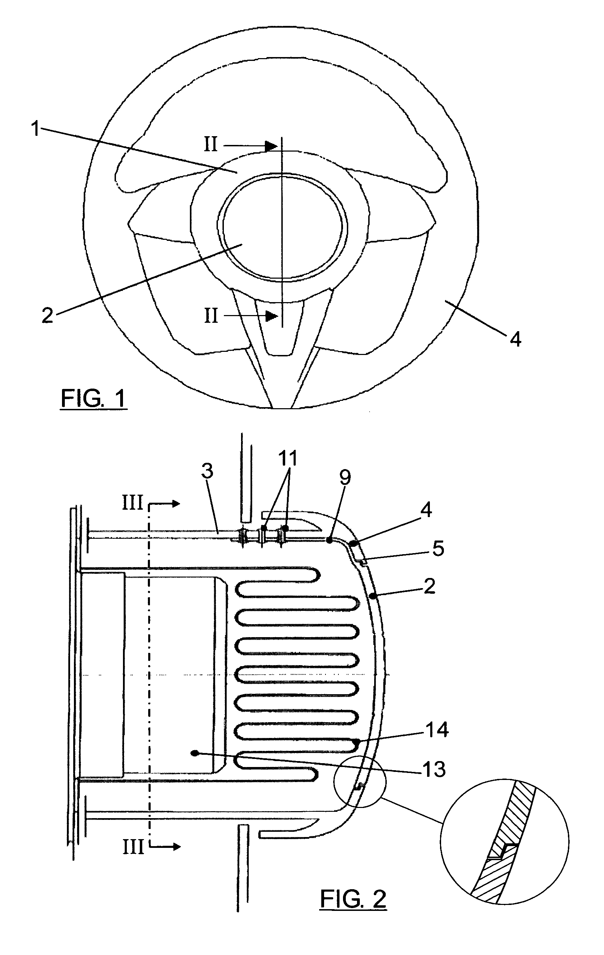

Figure 1 shows a general front elevational view of a steering wheel 1 in the central part of which the airbag module of the invention is assembled, including a cover formed by a body 1 and an independent lid 2.

As can best be seen in Figure 2, the body 1 consists of a cylindrical wall 3 integrated to the center of the steering wheel 1 through its inner base, whereas it is finished at the outer base with a wing 4, partially closing said base. This wing internally forms an inner step 5 in which a complementary step 6 fits, having the lid 2 in its contour, as can best be seen in the detail view of Figure 2. The lid 2 will thus be assembled in the cylindrical wall 3 through the inner base of said wall before assembling the cover on the steering wheel.

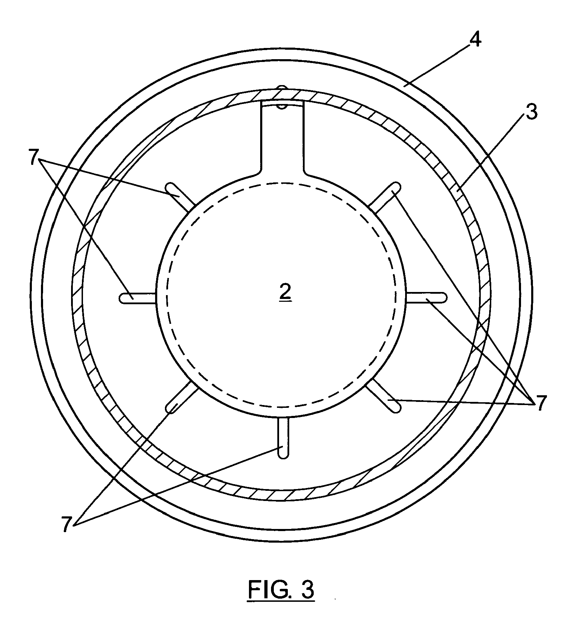

As can be seen in Figure 3, the inner wing 4 partially closing the outer base of the cylindrical wall 3 has, after the inner edge, weakening lines 7, made approximately in the radial direction, that can be broken by the activation of the airbag as will be explained below.

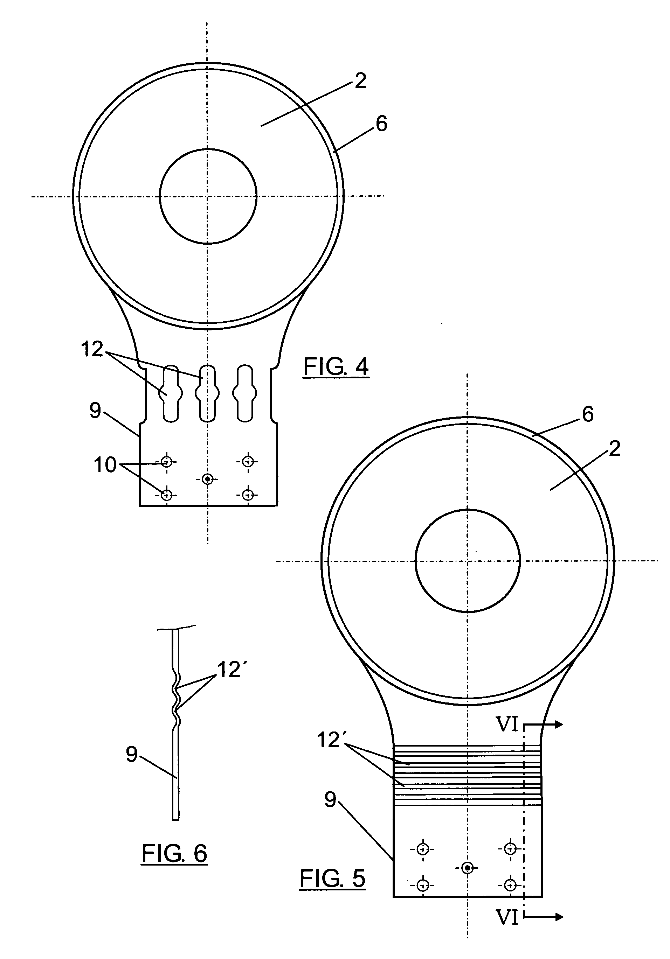

The lid 2 has an extension by way of a strap or tongue 9 after its free edge, as can best be seen in Figure 4, through which said lid is fixed to the cylindrical wall 3. To that end, the strap or tongue 9 has a series of holes 10 at the end portion for the case of rivets or fixing elements 11 for fixing it to the cylindrical wall 3, as indicated in Figure 2. The tongue or strap 9 further has a transverse weakening area between its start and the area occupied by the holes 10, which will provide an area of flexibility for the tongue. This weakening area can be formed by means of hollowing or oblong openings 11, or by means of transverse recesses 12, as in the case of Figures 5 and 6.

Once the lid 2 is arranged in the cylindrical wall 3 by means of coupling between steps 5 and 6 of both components, the lid is fixed to the wall 3 through the strap 9 by means of rivets 11. The cover thus formed will cover the active element of the airbag formed by a gas generator 13 and a flexible walled cushion 14 housed inside the cover in the folded position.

When the airbag is activated, the instant inflation of the flexible walled cushion or bag 14 causes the flange 4 to break through the weakening marks 7, Figure 3, such that step 5 no longer presses against step 6, the lid being released and ejecting outwardly, describing an arched movement around the transverse weakening area defined by openings 11 or recesses 12. The bag 14 will project outside the cover without launching any part of the cover or the lid 2 against the vehicle occupant.

## Claims

1. An airbag module for automotive vehicle steering wheels, comprising a gas generator, a flexible walled cushion or bag connected to the gas generator for the inflation thereof in the event of generator activation, and a cover enclosing the generator and the folded cushion, assembled in the steering wheel, **characterized in that** the mentioned cover is formed by an approximately cylindrical wall surrounding the generator and cushion and by an independent lid that can be fitted and fixed in the open outer base of the cylindrical wall for the closure thereof, which lid forms the visible central area of the steering wheel and has an extension after the edge by way of a flexible strap or tongue axially abutting against and fixed on the cylindrical wall; and which cylindrical wall has, after the edge in which the lid is fitted, weakening lines that can be broken by the inflation of the bag or cushion.

2. A module according to claim 1, **characterized in that** the cylindrical wall is finished at the outer edge with an inner ring-shaped flange forming a continuous inner step on which a complementary step that the lid has along its edge in turn rests and fits.

3. A module according to claim 1, **characterized in that** the extension in the form of a strap or flange of the lid has, close to its start, a transverse weakening area providing flexibility for said strap or flange.

4. A module according to claim 3, **characterized in that** the weakening area of the strap or tongue is formed by means of hollowing or openings made in transverse alignment in said strap or flange.

5. A module according to claim 3, **characterized in that** the weakening area of the strap or tongue is formed by means of transverse thickness reductions of said straps that are parallel and close to one another.

6. A module according to the previous claims, **characterized in that** the extension in the form of a strap or flange has, in the end area limited by the transverse weakening area, a series of holes for the passage of fastening or anchoring elements for fastening or anchoring it to the cylindrical wall.
